# EUROPEAN PATENT APPLICATION

(11) **EP 2 498 552 A1**
(43) Date of publication of application: **12.09.2012**
(21) Application number: 10826832.7
(22) Date of filing: 22.10.2010
(51) Int. Cl.: H04W 52/02, H04W 84/12

(54) **COMMUNICATION DEVICE, COMMUNICATION SYSTEM, COMMUNICATION DEVICE CONTROL METHOD, AND COMMUNICATION DEVICE CONTROL PROGRAM**

(30) Priority: 02.11.2009 JP 2009251918
(71) Applicant: NEC Corporation, Tokyo 108-8001 (JP)
(72) Inventor: ZAITSU, Makoto, Tokyo 108-8001 (JP)
(74) Representative: Vossius & Partner
(86) International application number: PCT/JP2010/069228
(87) International publication number: WO 2011/052700

(57) **Abstract**

In order to make possible stopping of a receive operation without stopping the communication operation of an external communication device while the effects on the reception of signals from the communication device are suppressed as much as possible, a communication device comprises: a transmission means for transmitting a first signal during a specified time interval to an external communication device provided with a stop transmission function for stopping transmission; and a reception means which is provided with a stop reception function for stopping reception, and receives a second signal transmitted by the external communication device. The communication device also comprises a stop transmission request means which includes in the first signal stop transmission request information for requesting the stopping of the transmission of the second signal to the external communication device; and a stop reception means which stops the receive operation of the reception unit after the first signal including the stop transmission request information is transmitted.

## Description

### TECHNICAL FIELD

The present invention relates to a communication device, a communication system, a communication device control method, and a communication device control program, in particular, to a communication device, a communication system, a communication device control method, and a communication device control program, which include a function of stopping reception operation.

### BACKGROUND ART

A communication device sometimes belongs to a network which a different communication device having a management function (hereinafter referred to as, "management device") forms to perform communication under the management thereof. When communicating with a different network, the communication device communicates through the management device. The network composed of the communication device and the management device is, for example, a wireless LAN (Local Area Network), a mobile phone system, a cordless phone system, Bluetooth (registered trademark), or the like.

In these communication systems, generally, the management device is called an access point (hereinafter referred to as, "AP"), a base station, a base phone, a master, or the like, and a communication device which is managed by the management device is called a station (hereinafter referred to as "STA"), a terminal, a telephone handset, a slave, or the like. As the wireless LAN system, for example, the wireless LAN based on IEEE (Institute of Electrical and Electronic Engineers, hereinafter referred to as "IEEE") 802.11 standardized by the IEEE 802 committee is known. Hereinafter, the wireless LAN based on IEEE 802.11 is described simply as "wireless LAN", and a background art of the invention is described using the wireless LAN as a specific example.

An infrastructure mode (hereinafter referred to as "infra-mode") and an ad hoc mode are known as a network configuration of the wireless LAN. The infra-mode is a mode in which a STA communicates with another STA or another network through an AP. The ad hoc mode is a mode in which communication between STAs is performed.

Regarding a power management function, IEEE power management defines a function of a power-saving mode (hereinafter referred to as "PS mode") in each of a STA in the infra-mode and a STA in the ad hoc mode. In the PS mode, a STA may be in one of two types of operation states, that is, an Awake state in which transmission and reception are possible and a Doze state which is a pause state.

In the infra-mode, a STA in the PS mode starts in synchronization with a beacon which an AP periodically transmits to become the Awake state, and transfers to the Doze state while communication is not performed. In the PS mode, the Awake state and the Doze state are intermittently alternated to reduce average power consumption.

In the ad hoc mode, a STA in the PS mode keeps the Awake state for a given period of time at beacon transmission intervals. The period of time is called an ATIM (Announcement Traffic Indication Message) window. A STA receives a frame transmission announcement from another STA during the ATIM window. The STA, which receives the transmission announcement, continues the Awake state in order to receive a frame from another STA. If the STA does not receive the frame transmission announcement from another STA, the STA transfers into a sleep state to reduce average power consumption.

On the other hand, an AP has to steadily receive a frame transmitted from a plurality of STAs at given timing. It is, therefore, necessary to be normally in the Awake state at any time, and difficult to transfer to the Doze state. Under this background, the IEEE 802.11 standard has no rules on a power management function for an AP.

A common AP is a stationary and uses a commercial power source. Therefore, power saving on the stationary AP has not been emphasized.

Since a wireless LAN system becomes widely used, a small portable device with a wireless LAN function is increasing. Further, a device having not only a STA function but also an AP function appears. A portable device is normally driven by a battery. In order to increase an operable time based on battery drive (hereinafter referred to as "battery drive time"), power saving control of each functional block in the device is important.

Power saving control of a STA in a wireless LAN system is achieved using the system defined by the IEEE 802.11 standard or another system. Power saving control of an AP is not easily achieved because no standard is defined. If a portable device installs an AP function without a power saving function, the battery drive time is extremely reduced compared with installation of only STA function witch a power saving function. Power saving measures for an AP becomes an issue when a battery-driven portable device installs the AP function.

In order to achieve power saving for an AP, various technologies are disclosed. In the technology described in Japanese Unexamined Patent Application Publication No.2004-336401 A (hereinafter referred to as "Patent Document 1"), an AP transmits a CTS (Clear To Send) frame including stop transmission period information to each STA. It is assumed that each STA keeps a stop transmission state during the stop transmission period indicated by the CTS frame, and the AP transfers into a sleep (Doze) state during the period. Thereby, power saving for the AP is achieved.

A technology for power saving of a base station is disclosed. In the technology described in Japanese Unexamined Patent Application Publication No.2002-158609 A (hereinafter referred to as "Patent Document 2"), a base station transmits, to a mobile station, an instruction to transfer into a power saving mode, using an informing signal. After transferring the mobile station into the power saving mode, the base station transfers into the power saving mode.

Japanese Unexamined Patent Application Publication No.2002-152129 A (hereinafter referred to as "Patent Document 3") discloses the technology that a base station does not transfer into a power saving mode without conditions, but transfers into the power saving mode when communication with a communication device on the communication side does not occur within a predetermined period of time.

### SUMMERY OF INVENTION)

### TECHNICAL PROBLEM

Each of the known technologies described above has a problem. In the method of Patent Document 1, when operating in the PS mode and being in the Doze state, a STA is not able to receive a CTS frame transmitted by an AP. As a result, a request from the AP for transferring to the Doze state does not reach the STA. When the STA transfers from the Doze state to the Awake state, the STA is not able to recognize that the AP is in the Doze state. Therefore, the STA is likely to transmit a frame to the AP in the Doze state. If the STA transmits a frame to the AP when the AP is in the Doze state, the AP is not able to receive the frame. The STA, therefore, repeats frame retransmission, until the AP returns to the Awake state, receives a frame and returns a reception response. When the STA is not able to receive the reception response for a predetermined period of time, the STA is likely to regard that the transmission fails and to perform rate-down. Causing increase of an occupation time in a wireless medium occupied by the STA and degraded communication efficiency, repetition of retransmission and rate-down are undesirable operations in a wireless LAN system.

In the technology described in Patent Document 2, not only an AP but also a STA transfers into the power saving mode. While an AP is in the power saving mode, a STA is, therefore, not able to communicate with another STA or an AP. In addition, when an AP transfers into the power saving mode, a plurality of STAs have to transmit, to the AP, an announcement of transferring into the power saving mode. The AP is not able to transfer into the power saving mode until the AP receives the announcement from all the STAs.

In the technology described in Patent Document 3, a condition to transfer into the power saving mode is only frequency of communication with a STA. A problem, therefore, occurs when a STA performs communication intermittently. Because an AP transfers into the power saving mode while communication with a STA is stopped, the AP does not potentially respond when the STA restarts communication.

Each of the technologies described above includes the problem that in a communication device to which an external communication device, like an AP and a base station, transmits a signal, it is impossible to stop a receive operation without affecting a communication operation of the external communication device or reception of a signal from the communication device.

An object of the present invention is to solve the above problem. The invention provides a communication device, a communication system, communication device control method, and communication device control program, which can stop the receive operation while stopping no communication operation of the external communication device, and suppressing effect on reception of a signal from the communication device.

### SOLUTION TO PROBLEM

The communication device of the invention includes transmission means for transmitting a first signal during a specified time interval to an external communication device provided with a stop transmission function for stopping transmission, reception means which is provided with a stop reception function for stopping reception and receives a second signal transmitted by the external communication device, stop transmission request means which includes in the first signal stop transmission request information for requesting the stopping of the transmission of the second signal to the external communication device, and stop reception means which stops the receive operation of the reception unit after the first signal including the stop transmission request information is transmitted.

The communication system of the invention includes a first communication device including transmission means for transmitting a first signal during a specified time interval, reception means which is provided with a stop reception function for stopping reception and receives a second signal transmitted by an external communication device, stop transmission request means which includes in the informing signal stop transmission request information for requesting stopping of the transmission of the second signal, and stop reception means which stops the receive operation of the reception means after the informing signal including the stop transmission request information is transmitted, and a second communication device including second reception means for receiving the informing signal, transmission means for transmitting the second signal, and stop transmission means for stopping the transmission of the second signal when the informing signal includes the stop transmission request information.

The communication control method includes a step of transmitting a first signal during a specified time interval to an external communication device provided with a stop transmission function for stopping transmission, a step of being provided with a stop reception function for stopping reception and receiving a second signal transmitted by the external communication device, a step of including in the first signal stop transmission request information for requesting stopping of the transmission of the second signal to the external communication device, and a step of stopping a receive operation after the first signal including the stop transmission request information is transmitted.

The communication device control program of the invention includes a step of transmitting a first signal during a specified time interval to an external communication device provided with a stop transmission function for stopping transmission, a step of being provided with a stop reception function for stopping reception, and receiving a second signal transmitted by the external communication device, a step of including in the first signal stop transmission request information for requesting stopping of the transmission of the second signal to the external communication device, and a step of stopping a receive operation after the first signal including the stop transmission request information is transmitted.

### ADVANTAGEOUS EFFECTS OF INVENTION

The communication device, the communication system, the communication device control method, and the communication device control program of the invention can stop the receive operation while stopping no communication operation of the external communication device, and suppressing effect on reception of a signal from the communication device.

### BRIEF DESCRIPTION OF THE DRAWINGS

Fig.1 is a block diagram illustrating a configuration of a communication device of a first exemplary embodiment of the invention.
Fig.2 is a timing chart illustrating an operation of a communication device and an external communication device of a first exemplary embodiment of the invention.
Fig.3 is a sequence chart illustrating a modified example of an operation of a communication device and an external communication device of a first exemplary embodiment of the invention.
Fig.4 is a block diagram illustrating a configuration which controls a communication device of a first exemplary embodiment of the invention using a CPU.
Fig.5 is a flow chart illustrating an operation in which control of a communication device of a first exemplary embodiment of the invention is performed using a CPU.
Fig.6 is a block diagram illustrating a configuration of a communication system of a second exemplary embodiment of the invention.
Fig.7 is a timing chart illustrating an operation of a communication system of a second exemplary embodiment of the invention,
Fig.8 is a sequence chart illustrating a first modified example of an operation of a communication system of a second exemplary embodiment of the invention.
Fig.9 is a sequence chart illustrating a second modified example of an operation of a communication system of a second exemplary embodiment of the invention.
Fig.10 is a timing chart illustrating an operation of a communication system of a third exemplary embodiment of the invention.
Fig.11 is a configuration diagram illustrating an entire wireless LAN system of a fourth exemplary embodiment of the invention.
Fig.12 is a block diagram illustrating a wireless LAN module of a fourth exemplary embodiment of the invention.
Fig.13 is a configuration diagram of a QUIET element defined by IEEE802.11 standard.
Fig. 14 is a timing chart illustrating a basic operation of a wireless LAN system of a fourth exemplary embodiment of the invention.
Fig. 15 is a timing chart illustrating a modified example of an operation of a wireless LAN system of a fourth exemplary embodiment of the invention.
Fig.i6 is a timing chart illustrating a second modified example of an operation of a wireless LAN system of a fourth exemplary embodiment of the invention.
Fig.17 is a block diagram illustrating an operation in which an AP of a fourth exemplary embodiment of the invention is controlled using a CPU.

### DESCRIPTION OF EMBODIMENTS

### (First Exemplary Embodiment)

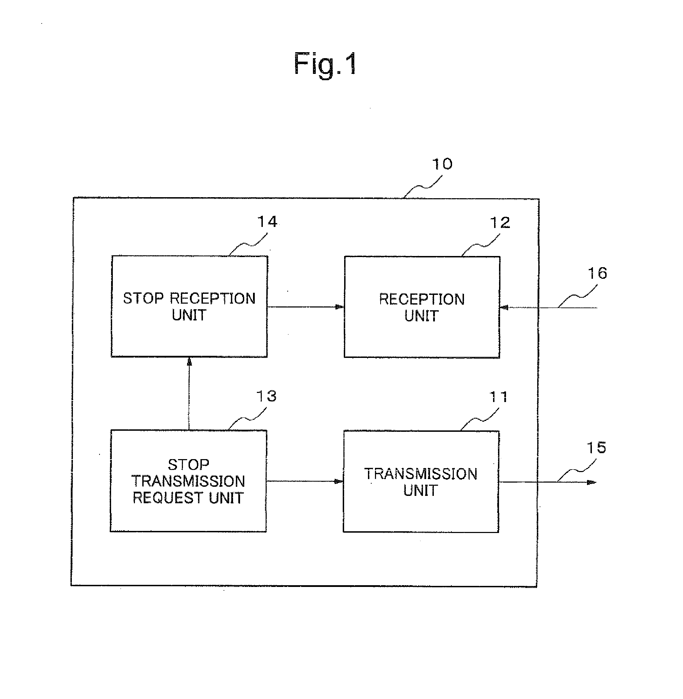

A first exemplary embodiment of the invention is described referring to drawings in detail. FIG. 1 is a block diagram illustrating a configuration of a communication device of a first exemplary embodiment of the invention. A communication device 10 includes a transmitter 11 for transmitting a first signal 15 during a specified time interval to an external communication device provided with a stop transmission function for stopping transmission and a receiver 12 which is provided with a stop reception function for stopping reception and receives a second signal 16 transmitted by the external communication device. Further, a stop transmission request unit 13 which includes, in the first signal, stop transmission request information for requesting the stopping of the transmission of the second signal to the external communication device, and a stop reception unit 14 which stops the receive operation of the receiver after the first signal including the stop transmission request information is transmitted.

The transmitter 11 transmits the first signal to the outside during a specified time interval. The first signal 15 is received by an external communication device which is not shown. The first signal 15 may be used in order to inform the external device of various pieces of information. The transmitter 11 includes the stop transmission request information in the first signal 15 to transmit to the outside, according to an instruction of the stop transmission request unit 13 described below.

The receiver 12 receives the second signal 16 transmitted from the outside to the communication device 10. The receiver 12 is set in a receivable state or in a stop reception state, according to an instruction of the stop reception unit 14 described below. "Receivable state" is a state in which reception is possible when the second signal 16 is transmitted. "Stop reception state" is a state in which reception is not possible even when the second signal 16 is transmitted. It is possible to keep consumed power of the receiver 12 in the stop reception state (hereinafter referred to as "consumed power in stop reception period") lower compared with consumed power of the receiver 12 in the receivable state (hereinafter referred to as "consumed power in receivable period").

The stop transmission request information which the stop transmission request unit 13 outputs is information for requesting to stop transmission of the second signal 16 to an external communication device. As described above, the transmitter 11 which receives the stop transmission request information includes the stop transmission request information in the first signal 15 and transmits the first signal 15 to an external communication device.

The stop reception unit 14 sets the receiver 12 into the stop reception state when the stop transmission request unit 13 generates the stop transmission request information.

Each of the first signal 15 and the second signal 16 is just a signal which is transmitted and received between the first communication device 10 and an external communication device, and may be a wired signal or a wireless signal. The same applies to each of exemplary embodiments described below.

The communication device of the present exemplary embodiment requests the outside to stop transmitting a signal and stops its own receive operation based on the configuration described above. Since the consumed power in stop reception period may be reduced compared with the consumed power in receivable period, power consumption may be reduced while stopping a signal from the outside. The external communication device is in a state of only stopping transmission of a signal, without transferring to a stop communication operation state, like the Doze state.

As described above, the communication device of the present exemplary embodiment does not stop a communication operation of an external communication device, and may stop a receive operation while suppressing effect on reception of a signal from the external communication device as much as possible.

### (Second Exemplary Embodiment)

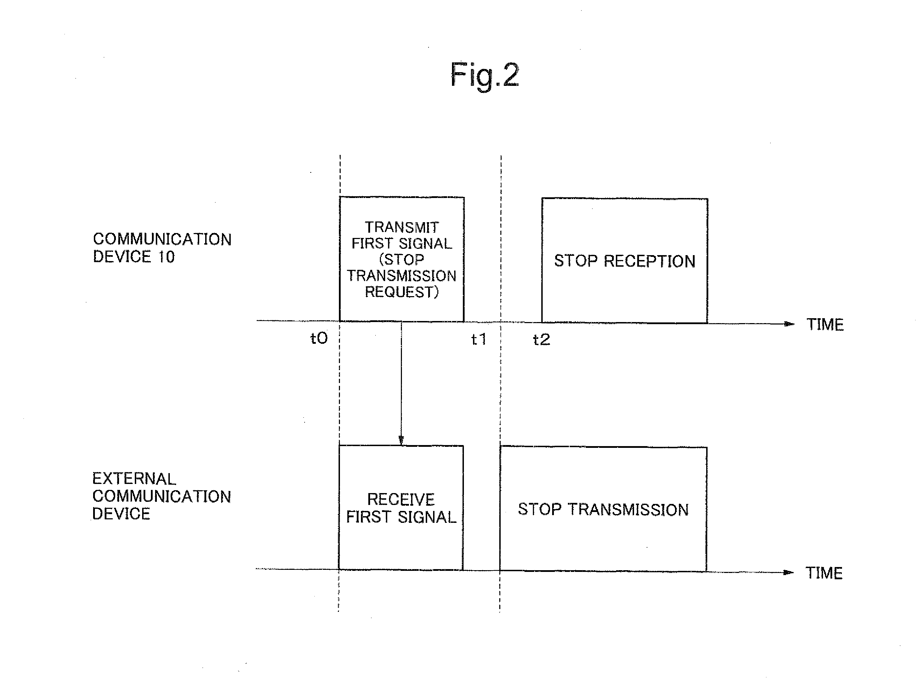

A second exemplary embodiment of the invention is described in detail referring to drawings. FIG. 2 is a timing chart illustrating an operation of a communication device and an external communication device in FIG. 2.

As shown in FIG. 2, the communication device 10 transmits the first signal 15 including the stop transmission request information at time t0, and an external communication device receives the first signal 15. The external communication device stops transmission of the second signal 16 at time t1. The communication device 10 sets the receiver 12 into the stop reception state at time t2.

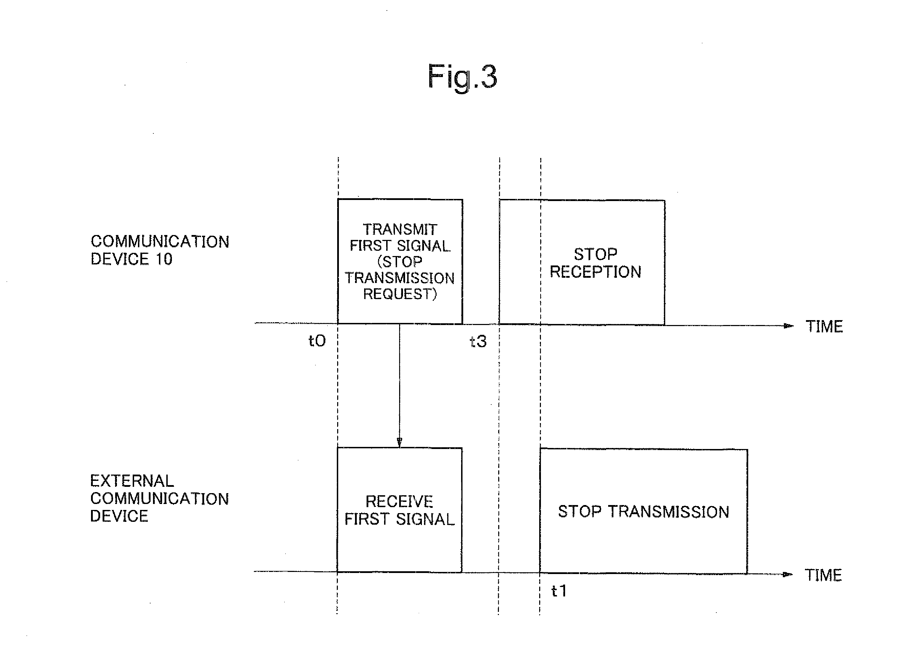

The communication device 10 may set the receiver 12 into the stop reception state at time t3 prior to t1. The operation thereof is illustrated in FIG. 3. FIG. 3 is a timing chart illustrating a modified example of the operation in FIG. 2. In this case, since the second signal 16 is likely to be transmitted between t1 and t3, the second signal 16 is likely not to be normally received. However, since the second signal 16 is not definitely transmitted after t1, a situation, that the communication device is not able to receive though the second signal 16 is transmitted, does not occur.

When the second signal 16 is not normally received by the receiver 12, it is only necessary to carry out a predetermined procedure, like retransmission, a procedure for delay of transmission or communication error, or the like. Since the above problem lies outside the scope of the invention, and can be easily solved by a person skilled in the art, detailed descriptions thereof are omitted.

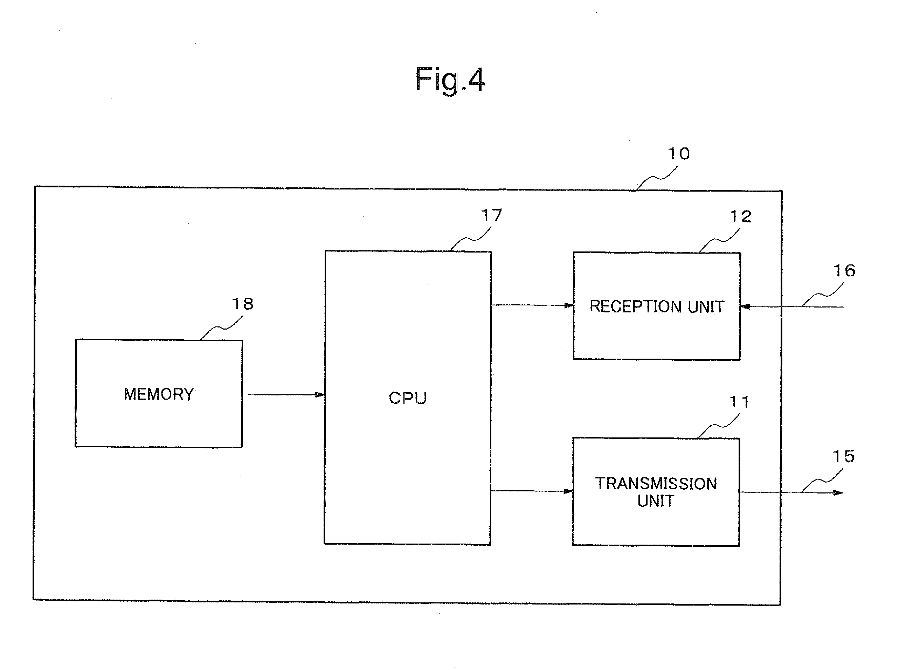

FIG. 4 is a block diagram illustrating a configuration which controls the communication device 10 using a CPU through a software process by a computer. In FIG. 4, the communication device 10 includes the transmitter 11, the receiver 12, CPU 17, and memory 18. The CPU 17 reads a program stored in the memory 18, and executes the same functions as the stop transmission request unit is and the stop reception unit 14.

The transmitter 11 transmits a first signal 15 during a specified interval. A transmission time interval of the signal 15 may not be constant. When the transmission time interval is changed, it is only necessary to announce the transmission time interval from the communication device 10 to the outside, or from an external communication device to the communication device 10, so that the external communication device can receive the first signal 15.

When meeting predetermined conditions, the stop transmission request unit 13 outputs stop transmission request information to the transmitter 11. The stop transmission request information sets predetermined conditions based on a state of the communication device 10 so as to stop a receive operation of the receiver 12, if necessary, and is not limited to particular ones.

The stop transmission request conditions are as follows. For example, if the stop transmission request condition is assumed as a time when traffic (communication information amount) between the communication device 10 and the external communication device is at a low level, it is possible to set the receiver 12 into a stop reception state at the time.

Otherwise, the stop transmission request condition may be that a process to be executed in priority to reception exists inside the communication device 10. Specifically, the condition is that a processing load inside the communication device 10 is heavy and a processing capability for receiving and processing the second signal 16 is decreased, or the like. In this case, a processing load of the communication device 10 may be reduced by setting the receiver 12 into the stop reception state.

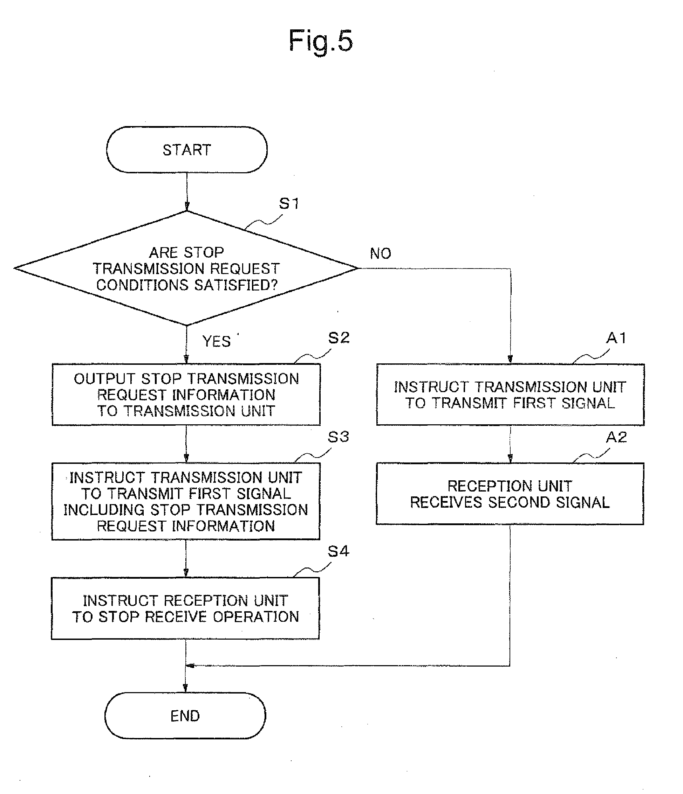

FIG. 5 is a flowchart illustrating an operation of the communication device 10 of FIG. 4. The operation of the communication device 10 of FIG. 4 is described with reference to the flowchart in FIG. 5. Initially, a CPU 17 determines whether or not stop transmission request conditions are satisfied (step S1). The stop transmission request conditions are conditions by which it is determined whether or not it is necessary to stop a receive operation of the receiver 12 based on a state of the communication device 10 as described below.

Determining that the stop transmission request conditions are satisfied in step S1, the CPU 17 generates stop transmission request information and outputs it to the transmitter 11 (step S2).

Determining that the stop transmission request conditions are not satisfied in step S1, the CPU 17 instructs the transmitter 11 to transmit the first signal 15 in step A1. The receiver 12 keeps a state in which the second signal 16 is receivable in step A2.

When it is determined that the stop transmission request conditions are satisfied in step S1, the CPU 17 instructs the transmitter 11 to transmit the first signal 15 including the stop transmission request information (step S3). The CPU 17 instructs the receiver 12 to stop the receive operation (step S4).

As described above, the communication device of the present embodiment can control a communication operation depending on set stop transmission request conditions.

### (Third Exemplary Embodiment)

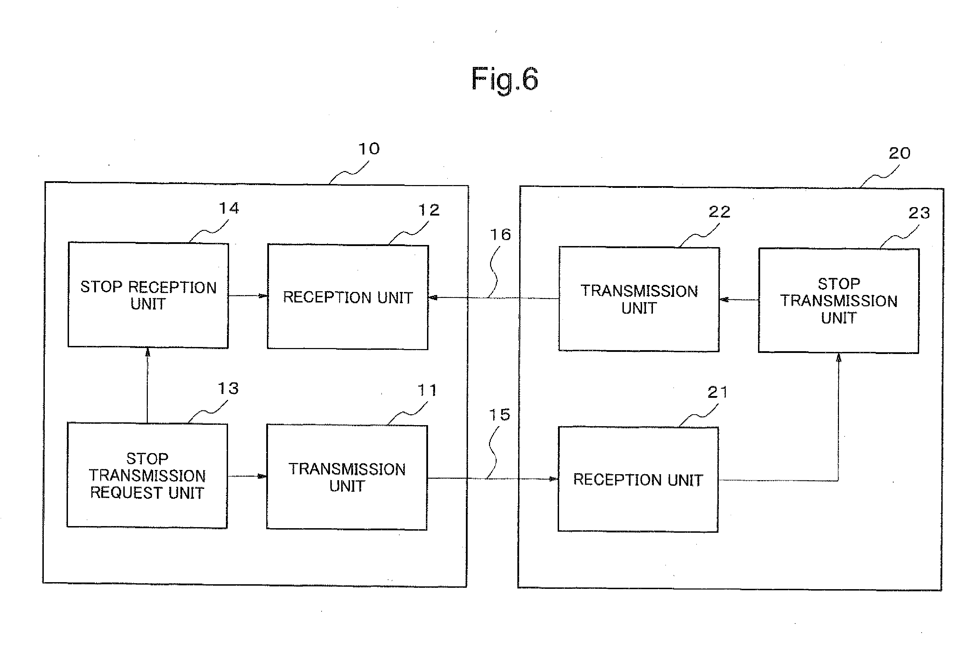

A third exemplary embodiment of the invention is described referring to drawings in detail. The communication devices of the first and the second exemplary embodiments transmit the first signal 15 including the stop transmission request information to the outside, and set themselves into the stop reception state. A further function can be added by including various parameters in the stop transmission request information. FIG. 6 is a block diagram illustrating a configuration of a communication system of the third exemplary embodiment. The communication system of the exemplary embodiment includes the communication device 10 and a communication device 20. The communication device 10 has the same configuration as that of the communication device of the first exemplary embodiment. The communication device 10 transmits the first signal 15 to the communication device 20. The communication device 20 transmits the second signal 16 to the communication device 10. The first signal 15 may include the stop transmission request information.

The communication device 20 includes a receiver 21, a transmitter 22 and a stop transmission unit 23.

The receiver 21 receives the first signal from the communication device 10.

The transmitter 22 transmits the second signal 16 to the communication device 10. The second signal l6 is transmitted only when a data to be transmitted exists, and needs not to be constantly outputted. The transmitter 22 is set into a transmittable state or a stop transmission state according to instructions from the stop transmission unit 23. "Transmittable state" means a state in which when information to be transmitted exists, the second signal 16 including the information can be transmitted. "Stop transmission state" means a state in which even if information to be transmitted together with the second signal 16 exists, the second signal 16 cannot be transmitted.

The stop transmission unit 23 sets the transmission unit 22 into the stop transmission state when the first signal 15 received by the receiver 21 includes the stop transmission request information.

The stop transmission request information in the present exemplary embodiment includes a stop transmission time that is a time when the transmitter 22 is set into the stop transmission state, and a restart transmission time that is a time when the transmitter 22 is set into the transmittable state. The stop transmission request unit 13 sets the stop transmission time and the restart transmission time into the stop transmission request information. The stop transmission unit 23 and the stop reception unit 14 control operations of the transmitter 22 and the receiver 12 using the stop transmission time and the restart transmission time, respectively. Without including the stop transmission time and the restart transmission time into the stop transmission request information, one of the stop transmission time and the restart transmission time, and a stop transmission period of time that is a period of time in which the stop transmission state continues, may be included thereinto. Otherwise, only the stop transmission period of time may be included in the stop transmission request information.

In the communication device 20, the stop transmission unit 23 sets the transmitter 22 into the stop transmission state at the stop transmission time, and sets the transmitter 22 into the transmittable state at the restart transmission time.

In the communication device 10, the stop reception unit 14 sets the receiver 12 into the stop reception state at or after the stop transmission time, and sets the receiver 12 into the receivable state at or before the restart transmission time.

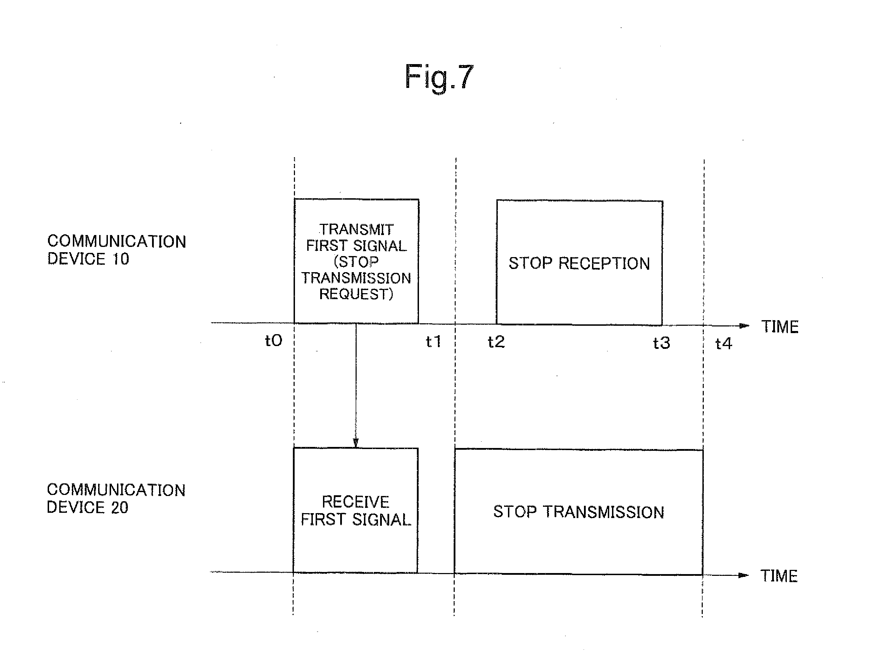

With reference to a timing chart, an operation of a communication system of the present exemplary embodiment is described. FIG. 7, FIG. 8, and FIG. 9 are timing charts illustrating operations of the communication device 10 and an external communication device.

As shown in FIG. 7, at the time 0, the communication device 10 transmits the first signal 15 including the stop transmission request information and the second communication device 20 receives the first signal 15. The second communication device 20 stops transmission of the second signal 16 at the stop transmission time (time t1). The communication device 10 sets the receiver 12 into the stop reception state at the time t2 which is at or after the time t1.

At the time t3 which is at or before the restart transmission time (time t4), the communication device 10 sets the receiver 12 into the receivable state. At the time t4, the communication device 20 sets the transmitter 22 into the transmittable state.

According to the above control, the communication device 10 can set the receiver 12 into the stop reception state after the communication device 20 sets the transmitter 22 into the stop transmission state. The communication device 10 can set the receiver 12 into the receivable state before the communication device 20 sets the transmitter 22 into the transmittable state.

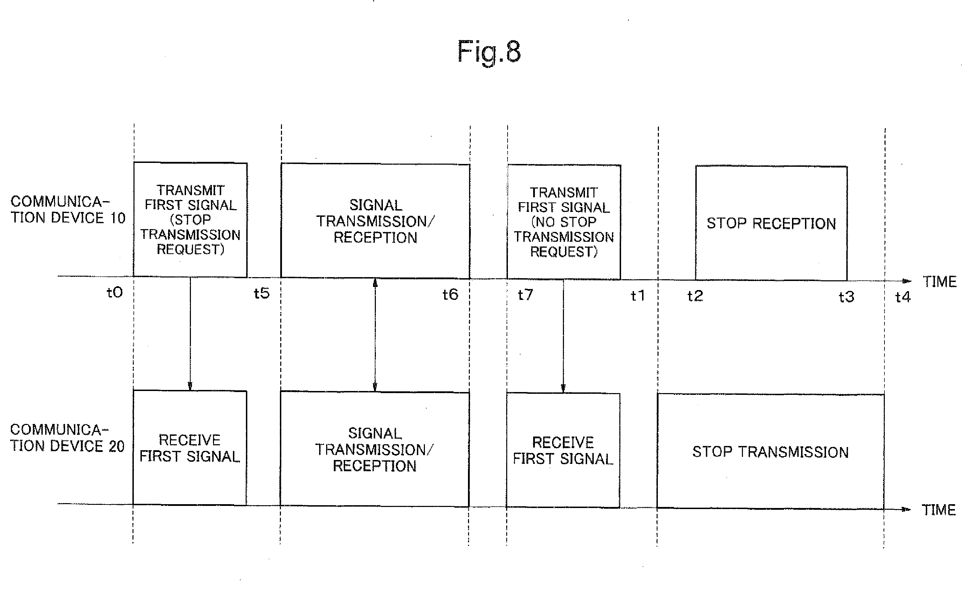

As shown in FIG. 8, the stop transmission time and the restart transmission time may be set at or after a transmission time (time t7) of the fist signal next to the first signal 15 including the stop transmission request information. Thereby the second first signal 15 transmitted at t7 needs not to include the stop transmission request information. In this case, transmitter 22 and the receiver 12 remain in an operable state for the period of time between completion of the transmission of the initial first signal 15 and the transmission of the second first signal (from time t5 to time t6). The communication device 10 and the communication device 20 can, therefore, mutually transmit and receive a signal. For example, data transmission and reception, and exchange of information between the communication device 10 and the communication device 20, and confirmation of a communication condition therebetween are possible.

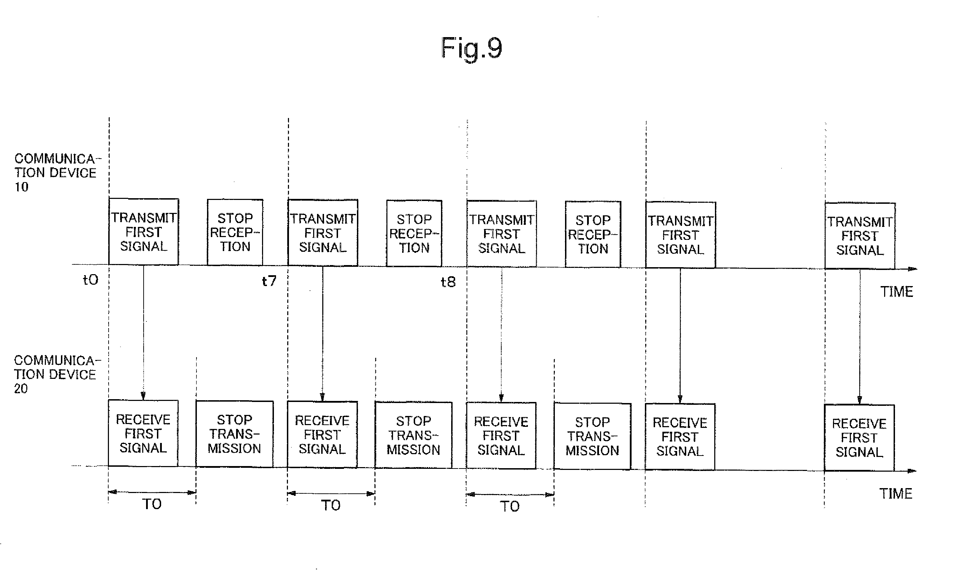

The stop transmission request information may include the number of repetitions of stop and restart of transmission in addition to the stop transmission time and the restart transmission time. Fig. 9 illustrates the operation which is carried out when the first signal 15 transmitted at t0 includes the number of repetitions "3". Even if the first signal 15 transmitted at the time t7 and the time t8 does not include the stop transmission request information, the communication device 20 is set three times into the stop transmission state. The communication device 10 can be set into the stop reception state in each case. In order to include the number of repetitions of setting of the stop transmission state, it is only necessary to set the stop transmission time and the restart transmission time as a delay time behind the transmission time of the first signal. Each transmission time of the first signal is defined as a reference time, and the stop transmission time and the restart transmission time are measured based on the reference time. In FIG. 9, the period of time T0 corresponds to the delay time. However, in FIG. 9, the time required for the communication device 20 to start reception, complete reception and recognize the stop transmission request information is ignored. In this way, by including the number of repetitions of the stop of the transmission in the communication device 20 in the stop transmission request information, the stop of transmission and the restart of the transmission may be repeatedly performed by transmitting the stop transmission request information just one time.

As described above, when the stop of the transmission is repeated, a repeating cycle may be set as a predetermined value and included in the stop transmission request information as stop transmission cycle information.

It goes without saying that it is required to consider a transfer delay time, a response delay time, and the like in order to set each time. The transfer delay time is, for example, a delay time from transmission of the first signal by the communication device 10 to reception by the second communication device 20. The response time includes a process time from reception of the first signal by the second communication device 20 to recognition of the stop transmission request information thereby, a time required for the transmitter 22 and the receiver 12 to switch between the operable state and a stop operation state, and the like

A before-and-after relation of a set time of the operable state and the stop state of the receiver 12 and the transmitter 12 is not necessarily limited to the above ones. However, the communication device 10 may not receive the second signal 16 from the communication device 20 depending on the before-and-after relation of the set time. In this case, retransmission, delay of transmission, an error process, or the like may be used as described above.

The communication device 10 of the exemplary embodiment may be achieved through a software process by a computer, like the first exemplary embodiment. Functions of the stop transmission request unit 13 and the stop reception unit 14 in the communication device 10 may be processed using software.

As described above, in the present exemplary embodiment, control corresponding to patterns of stop of transmission and restart of transmission may be performed by one-time transmission of the stop transmission request information.

### (Fourth Exemplary Embodiment)

In a communication system of a fourth exemplary embodiment, a communication device 10 can transmit stop transmission request information to a communication device 20 based on state of communication between the communication device 10 and the communication device 20.

The configuration of the communication system of the fourth exemplary embodiment is similar to that of the communication system of the third exemplary embodiment, and includes the communication device 10 and the communication device 20. The communication device 10 has the same configuration as the communication device 10 of the first and second exemplary embodiments, and the communication device 20 has the same configuration as the communication device 20 of the second exemplary embodiment. The communication device 10 transmits the first signal 15 to the communication device 20. The first signal 15 may include the stop transmission request information. The communication device 20 transmits the second signal 16 to the communication device 10.

In the present exemplary embodiment, the stop transmission request unit 13 of the communication device 10 generates the stop transmission request information based on states of communication between the communication device 10 and the communication device 20. The communication states can be determined based on, for example, measurement results of a traffic volume. That is, the stop transmission request unit 13 measures traffic, and determines whether to carry out a stop transmission request to the communication device 20, and contents of the request.

For example, the stop transmission request unit 13 determines that the stop transmission state should not be set when the traffic volume is large, and does not generate the stop transmission request information. Otherwise, it is possible to decrease a stop transmission time, delay a stop transmission time, or decrease the number of repetitions of stopping of transmission, when the traffic volume is large. When the traffic volume is small, it is determined that it is efficient to set the stop transmission state, and the stop transmission request information is generated. For example, when the traffic volume is small, it is possible to increase the stop transmission time, set the stop transmission time to be earlier, or increase the number of repetitions of stopping of transmission.

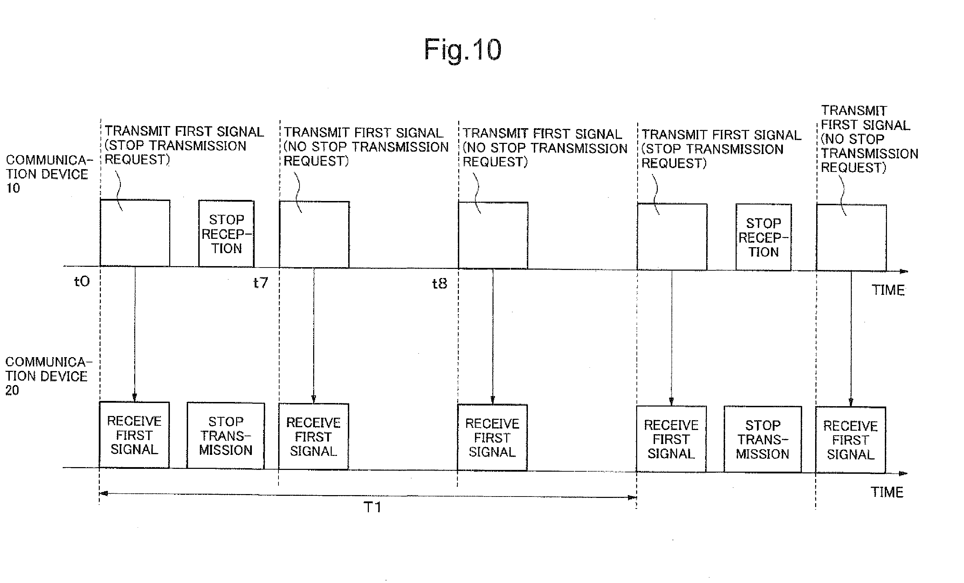

Or, the stop transmission request unit 13 may set an occurrence cycle of the stop transmission period of time according to traffic conditions. FIG. 10 is a timing chart illustrating an operation which is carried out when the occurrence cycle of the stop transmission period of time is set according to traffic conditions, in the communication system of the present exemplary embodiment. The occurrence cycle of the stop transmission period of time is a period of time T1 in FIG. 10, the stop transmission period of time occurs with the cycle. FIG. 10 illustrates an operation which is carried out when the first signal transmitted at t0 includes an occurrence cycle "3". Even though the first signal 15 transmitted at the time t7 and at the time t8 does not include the stop transmission request information, the communication device 20 is set into the stop transmission state every three transmissions of the first signal 15. In each case, the communication device 10 is set into the stop reception state.

For example, the stop transmission request unit 13 only has to decrease the cycle when the traffic is large and increase the cycle when the traffic is small. Or, the occurrence cycle of the stop transmission period of time may be set based on the cycle with which a frame is transmitted and received between the communication device 10 and the communication device 20. The frame periodically transmitted and received may be a real-time data, for example, a frame including a data, like a voice, or an image. In VoIP (Voice over Internet Protocol), for example, if a frame of 60 bytes is transmitted and received every 20 ms, a time interval of each of the stop transmission time and the restart transmission time may be 20 ms. The stop transmission period of time that is a time length between the stop transmission time and the restart transmission time only has to be set so that a frame with 60 bytes can be sufficiently transmitted and received in view of a communication rate.

Timing for traffic measurement is not particularly limited. For example, the measurement is possible before or after of transmission of the stop transmission request information.

For example, if the stop transmission time is set like the communication system of the third exemplary embodiment, after the communication device 10 transmits the stop transmission request information, the reception unit 12 thereof is not set into the stop reception state until the transmission unit 22 of the communication device 20 really transfers into the stop transmission state. The communication device 10, therefore, can receive the second signal 16 from the communication device 20. The communication device 10 can constantly transmit the first signal 15 and other signals from the transmission unit 11 thereof to the communication device 20. The communication device 10 can communicate with the communication device 10 until the transmission unit 22 of the communication device 20 transfers into the stop transmission state. Therefore, after transmitting the stop transmission request information, the communication device 10 can measure traffic between the communication device 20 and the device 10 until the transmission unit 22 of the communication device 20 really transfers into the stop transmission state. Various parameters included in the stop transmission request information next transmitted, for example, the stop transmission time, the number of repetitions of stopping of transmission, and the like, can be set based on the measured traffic.

When the stop transmission time is set in the stop transmission request information, the second signal 16 can be transmitted from the communication device 20 to the communication device 10 until the transmission stops. Then rejection of setting the transmission unit 22 into the stop transmission state or stop of setting the reception unit 12 of the communication device 10 into the stop reception state may be transmitted from the communication device 20 to the communication device 10

In the communication system of the fourth exemplary embodiment, the stop transmission time, the number of repetitions of stopping of the transmission, occurrence cycle of stop of the transmission, and the like, of the stop transmission request information are set based on the communication conditions between the communication devices. Therefore, the case, in which the communication devices transfer into the stop transmission state and the stop reception state even though it is desirable to continue the communication between the communication devices, does not occur. Accordingly, interruption and delay of communication are prevented, and effect on communication is minimized while efficiently achieving power saving.

The communication device 10 of the exemplary embodiment may be achieved by software processing by a computer, like the first exemplary embodiment. The functions of the stop transmission request unit 13 and the stop reception unit 14 of the communication device 10 are processed using software.

### (Fifth Exemplary Embodiment)

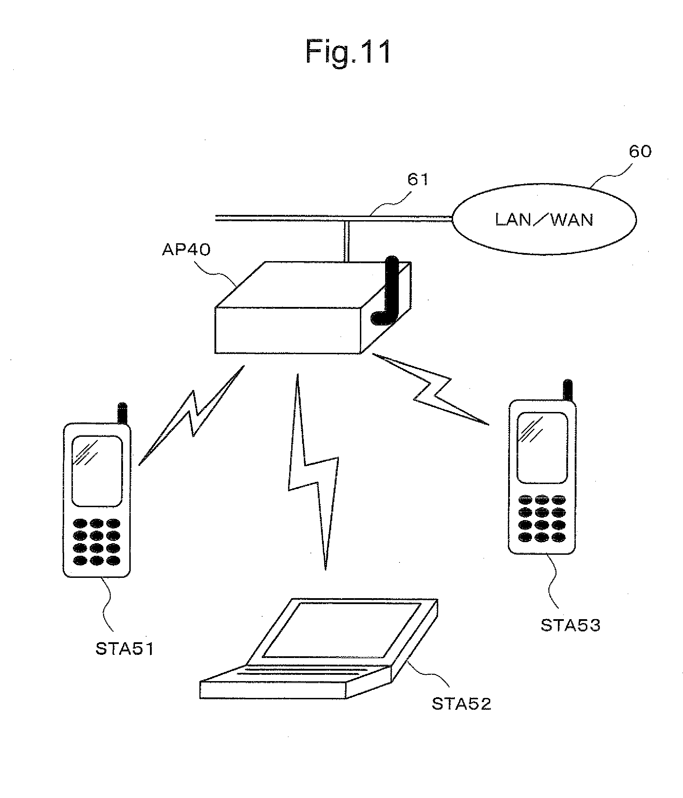

An example of an application to a wireless LAN system is described below, as a specific exemplary embodiment of the invention. FIG. 11 is a configuration diagram illustrating an entire wireless LAN system of a fifth exemplary embodiment of the invention. The wireless LAN system includes an AP 40 and STAs 51, 52, 53, and works in the infra-mode. The STAs 51 and 53 are mobile phone devices having a STA function of the wireless LAN, and the STA 52 is a personal computer (hereinafter referred to as "PC") having the STA function of the wireless LAN. The AP is connected to a LAN (Local Area Network) or a WAN (Wide Area Network) 60.

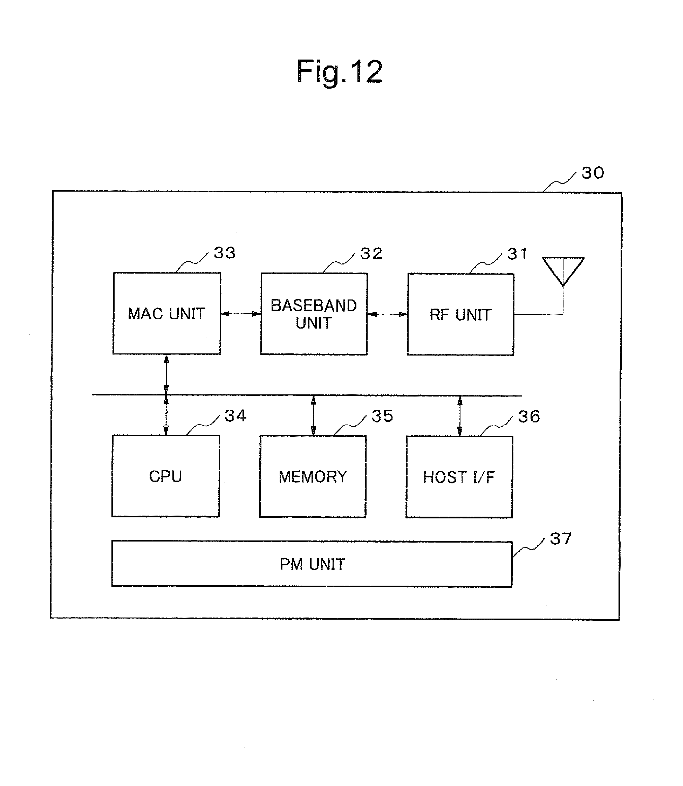

The AP 40 and the STAs 51, 52, 53 include a wireless LAN module 30 shown in FIG. 12. The wireless LAN functions of the AP 40 and the STAs 51, 52, 53 are achieved by the wireless LAN module 30. The wireless LAN modules 30 in the AP 40 and the STAs 51, 52, 53 have the same basic hardware configuration.

FIG. 12 is a block diagram illustrating a hardware configuration of the wireless LAN module 30. The wireless LAN module 30 includes a radio frequency (hereinafter referred to as "RF") unit 31, a baseband (hereinafter referred to as "BB") unit 32, and MAC (Media Access Control) unit 33. The wireless LAN module 30 further includes CPU 34, memory 35, host interface (hereinafter referred to as "host I/F) unit 36, and power management (hereinafter referred to as "PM") UNIT 37.

The RF unit 31 changes a baseband signal received from the BB unit 32 into a high frequency signal used in radio media. The RF unit 31 further changes the high frequency signal received through the radio media into a signal in a frequency band processed by the BB unit 32. The BB unit 32 modulates the BB signal into a radio signal or extracts the BB signal by demodulating the radio signal. The MAC unit 33 controls a configuration and transmission and reception of a frame.

The host I/F 36 is an interface for giving and receiving an application data and control information to and from a host. In the AP 40, a main processing unit controlling the AP as a device (not shown) corresponds to the host. The main processing unit of the AP 40 performs, for example, control of an AP function using the wireless LAN module 30, and communication control between the wireless LAN and the LAN/WAN 60. In the STAs 51 and 53, a part, which performs processing as a mobile phone device and communication control between a mobile phone device and the wireless LAN, corresponds to the host. In the STA 52, a part, which performs processing as a PC and communication control between a PC and the wireless LAN, corresponds to the host.

Various systems are available as specific hardware forming the host I/F 36. For example, the host I/F may be realized using a SDIO (Secure Digital Input/Output), a USB (Universal Serial Bus), a PCI (Peripheral Component Interconnect) bus, or the like.

The PM unit 37 supplies a clock and power which are used in each of circuit blocks included in the wireless LAN module 30 like the RF unit 31, the BB unit 32, and the MAC unit 33. The PM unit 37 controls supply, stop, or frequency change of a clock, and presence or absence of power supply depending on an operation state of each block, that is, a normal operation state or a power saving state.

The CPU 34 controls the RF unit 31, the BB unit 32, and the MAC unit 33 according to the program stored in the memory 35, and achieves a function of the AP 40 or the STAs 51, 52, 53.

Initially, a QUIET element defined in the IEEE 802.11 standard and a utilization method for a QUIET element are described. Since details of a QUIET element are described in the IEEE 802.11 standard, descriptions thereof are limited to a range required for understanding of the present exemplary embodiment. In the wireless LAN defined in the IEEE 802.11 series standard, the 2.4 GHz band and the 5 GHz band are described as a physical layer. Since radars also use the 5 GHz band, avoidance of interference with the radars is mandatory when the wireless LAN system uses the 5 GHz band. An AP in the wireless LAN system normally performs detection of a radar wave. When the AP observes whether or not the radar wave exists, since a transmission wave from a STA interferes, the AP transmits stop transmission period information using a QUIET element included in a beacon, temporarily stops transmission of each STA, and performs observation of the radar wave during the period of time. In the present exemplary embodiment, power saving of the AP 40 and the STAs 51, 52, 53 is achieved using a QUIET element.

Since the 2.4 GHz band is not used for the radars, detection of the radar wave by the wireless LAN is not required in the 2.4 GHz band. Therefore, a QUIET element which has the object defined in the IEEE 802.11 standard is unnecessary. However, in the wireless LAN using the 2.4 GHz, the present exemplary embodiment described below may be applied to the 2.4 GHz wireless LAN using a QUIET element defined in the IEEE 802.11 standard.

In the present exemplary embodiment, a QUIET element is used in order to request stopping of transmission from the AP 40 to the STAs 51, 52, 53. That is, the AP40 transmits a beacon with a QUIET element and transfers the STAs 51, 52, 53 into the stop transmission state for a predetermined period of time. "Stop transmission state" is a state in which frame transmission to at least the AP is stopped. The state may be a state in which radio wave transmission by the RF 31 is stopped and transmission of all frames are stopped. Since transmission functions of the BB unit 32 and the MAC unit 33 are unnecessary during the period of time for which transmission by the RF unit 31 is stopped, the functions may be stopped. Alternatively, the STAs 51, 52, 53 may stop only frame transmission to the AP 40 and perform frame transmission between the STAs 51, 52, 53 and frame transmission to another AP. On the contrary, the STAs 51, 52, 53 in the stop transmission state may be set into the Doze state in which not only transmission is stopped but both transmission and reception are stopped.

The AP 40 transfers into the Doze state on the assumption that the STAs 51, 52, 53 transfer into the stop transmission state, in synchronization with the period of time. Power saving of the AP 40 is achieved by certainly transferring the STAs 51, 52, 53 into the stop transmission state and meanwhile transferring the AP 40 into the Doze state.

The AP 40 just has to stop reception of frames from the STAs 51, 52, 53. Therefore, it is unnecessary to set the AP 40 into the Doze state in which transmission and reception are stopped, as described above. For example, it is possible to stop reception of frame from all peripheral APs and STAs including the STAs 51, 52, 53, and keep the frame transmission function in the operable state without stopping the function. Even though the AP 40 is set into the Doze state, the AP 40 may perform a process other than transmission and reception of the radio signal, like a process related to an interface to a host device. In view of saving power for the AP 40, it is desirable to decrease power consumption as much as possible by stopping everything except a necessary block in the AP 40.

Three types of frames, a management frame, a control frame, and a data frame, are disclosed as a MAC layer frame, in the IEEE 802.1 standard. In the management frame, a frame, like a beacon, a Probe Request, a probe response is defined. The beacon is a frame which an AP periodically transmits in the infra-mode, and includes various pieces of information to be announced to a STA. The Probe Request is a frame by which a STA inquires of periphery about presence of a wireless cell. The Probe Response is a frame by which an AP responses to the Probe Request in the infra-mode.

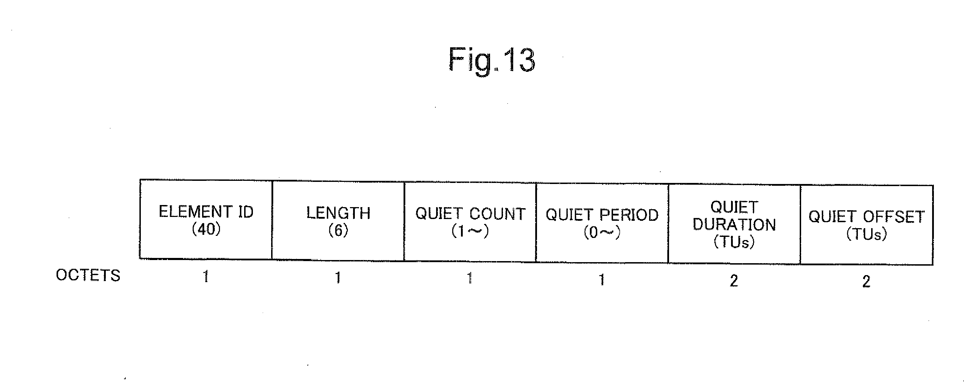

FIG. 13 illustrates a configuration of the QUIET element defined in the IEEE 802.11 standard. The QUIET element may be included in the beacon or the Probe Response. The QUIET element is composed of 6 types of parameters. "40" (fixed value), an identifier of the QUIET element is set in Element ID. "6" (fixed value), a length of the QUIET element is set in the Length. Contents of Quiet interval are set in Quiet Count, Quiet Period, Quiet Duration, and Quiet Offset. Quiet Interval means conditions related to stop transmission control of a STA from transmission of the QUIET element to completion of stop of transmission, which is performed under conditions designated by the QUIET element. Quiet Count means the number of time of setting a STA into the stop transmission state. Quiet Period means a repetition cycle of setting a STA into the stop transmission state. Quiet Duration means a length of a period of time for which a STA is kept in the stop transmission state. Quiet Offset means a delay time from beacon transmission to setting a STA in the stop transmission state. Since details of each parameter are described in the IEEE 802.11 standard, more detailed descriptions thereof is omitted.

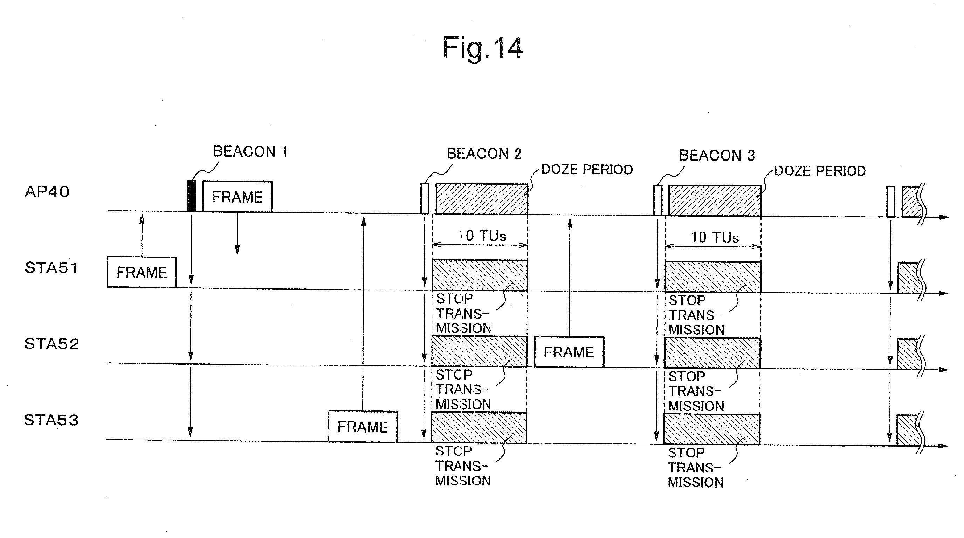

Next, an operation of the exemplary embodiment is described with reference to drawings. FIG. 14 is a timing chart illustrating a basic operation of the AP 40, and the STAs 51, 52, 53 in the wireless LAN system in FIG. 11.

The AP 40 transmits a beacon including a QUIET element shown in FIG. 13. The STAs 51, 52, 53 start the period of time determined by Quiet Interval beginning at a beacon 2, according to contents of each parameter of a QUIET element included in a beacon 1. That is, the STAs 51, 52, 53 transfer into the stop transmission state. Meanwhile, the AP 40 transfers into the Doze state.

In the operation example in FIG. 14, Quiet Count = 1, Quiet Period = 0, Quiet Duration = 10, Quiet Offset = 0 are set. Quiet Count = 1 means that a period of time defined by Quiet Interval starts from the beacon 2 which is a beacon next to the beacon 1. Quiet Period = 0 means that the period of time defined by Quiet Interval does not have a cycle, that is, the period of time which is a target of Quiet Interval is just one time. Quiet Duration = 10 means that the period of time for which a STA is set in the stop transmission state is 10 [TU]. The unit TU is short for time unit, defined as 1 [TU] = 1024 [µ sec] in the IEEE 802,11 standard. Therefore, 10 [TU] equals to 10.24 [insec]. Quiet Offset = 0 means that a period of time from the beacon 2 to start of the period of time set by Quiet Interval is 0 [TU], that is, it is required to transfer into the stop transmission state shortly after reception of the beacon 2.

The values of Quiet Count, Quiet Period, Quiet Duration, and Quiet Offset described here are one of examples, and parameters to be set according to a policy of a wireless LAN system. The present exemplary embodiment is, therefore, not limited to the above values.

As described above, power saving of the AP 40 can be achieved by periodically transferring the STAs 51, 52, 53 into the stop transmission state by a QUIET element included the beacon 1 to transfer the AP 40 into the Doze state. The above is the basic operation of the exemplary embodiment.

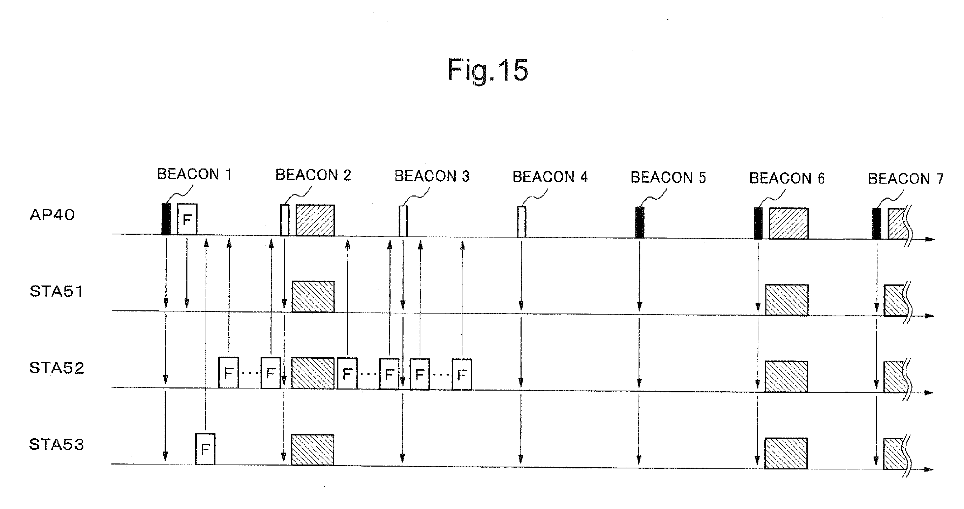

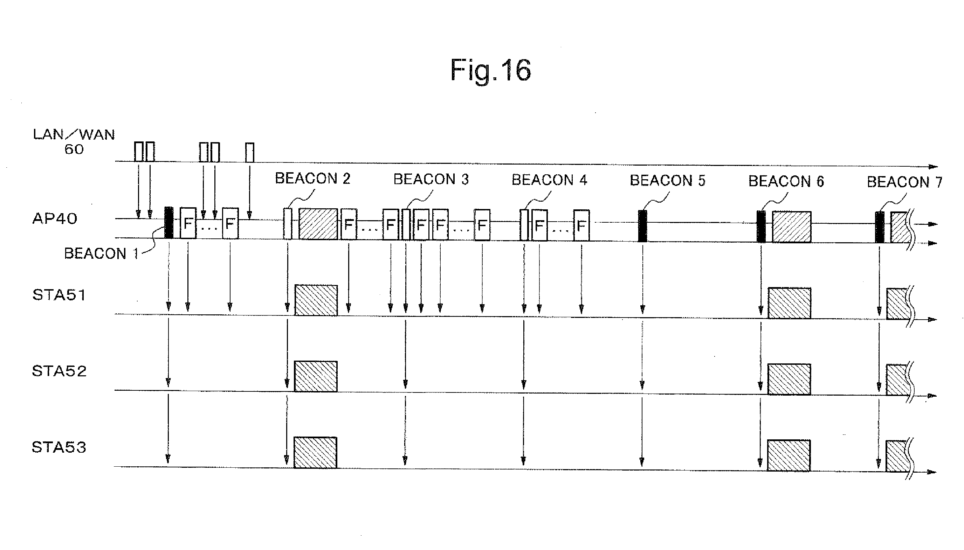

However, in the above basic operation, a period of time, for which the AP 40 is in the Doze state and communication is interrupted for a given period of time, occurs. Accordingly throughput of the whole system is likely to decrease. In the present exemplary embodiment, therefore, the AP40 monitors traffic conditions and is set into the communication priority mode when the traffic volume is equal to or more than the given volume. "Communication priority mode" is one of operation states of the AP 40, and the mode giving priority to not power saving but continuation of communication. The AP 40 in the communication priority mode can continue communication in a normal operation state with the STAs 51, 52, 53, by transmitting a beacon without a QUIET element. The operation of the AP 40 in the communication priority mode is described below with reference to FIG. 15 and FIG. 16.

FIG. 15 is a timing chart illustrating an operation which is performed when a frame is continuously received from the AP 40. As shown in FIG. 15, based on a content of each parameter in the QUIET element included in the beacon 1, after completion of reception of the beacon 2, the STAs 51, 52, 53 are set into the stop transmission state, and the AP 40 transfers into the Doze state.

At this time, if the AP 40 continuously receives a plurality of frames ("F" in FIG. 15) from a STA, for example, the STA 52, the AP 40 transfers into the communication priority mode. Beacons 3, 4 without a QUIET element are transmitted after the next beacon 2. Thereby, since the AP 40 and the STAs 51, 52, 53 operate normally after the beacon 3, throughput deterioration can be prevented.

After that, when the AP 40 does not continuously receive a frame from any one of the STAs 51, 52, 53 for a predetermined period of time, the AP 40 completes the communication priority mode and transfers into a power saving priority mode. "Power saving priority mode" is one of operation states of the AP 40 and a mode in which power saving takes priority of continuation of communication. The AP 40 in the power saving priority mode transmits beacons 6, 7 each having a QUIET element after the beacon 5, and restarts the power saving operation of the AP 40.

In the descriptions above, a case that the AP 40 receives a frame from the STA 52 continuously is exemplified. Continuous reception from the STAs 51, 53 is similar thereto. In the case of alternate continuous reception from a plurality of the STAs, the AP 40 may also transfer into the communication priority mode.

Standards of judgment on the continuous reception in the AP 40 may be arbitrarily set based on a system policy, and is particularly not limited to the present exemplary embodiment. For example, when a plurality of frames between a beacon and the next beacon are received, it may be determined to be continuous reception. Further, when a monitoring timer is prepared, and a plurality of frames are received in a cycle of the timer, it may be determined to be continuous reception.

The above descriptions are descriptions of the case in which the AP 40 continuously receives a frame from the STAs 51, 52, 53. Inversely, when the AP 40 continuously receives a frame from a host, the similar control can be performed. With reference to FIG. 16, an operation which is performed when the AP 40 receives a frame from the LAN/WAN 60 is described below.

FIG. 16 is a timing chart illustrating an operation which is performed when a frame is continuously received from the LAN/WAN 60. As shown in FIG. 16, based on a content of the QUIET element included in the beacon 1, after completion of reception of the beacon 2, the STAs 51, 52, 53 are set into the stop transmission state and the AP 40 transfers into the Doze state. When continuously receiving frames of the STAs 51, 52, 53 ("F" in FIG. 16) from the LAN/WAN 60, the AP 40 stores the frames in the memory 35. When the retaining amount thereof reaches a predetermined amount or more, the AP 40 transfers into the communication priority mode and transmits a beacon without a QUIET element from the next beacon 2. Thereby, since the AP 40 and the STAs 51, 52, 53 operate normally after the beacon 3, throughput deterioration can be prevented. After that, when the retaining amount of the frames addressed to the STAs 51, 52, 53 falls below a predetermined value or less, the AP 40 completes the communication priority mode and transfers into the power saving priority mode. The AP 40 in the power saving mode transmits beacons 6, 7 and a beacon including a QUIET element following beacon 5 and restarts the power saving operation thereof. Like as FIG. 15, standards of judgment on the retaining amount of the frames on whether to transfer into the communication priority mode may be arbitrarily set based on a system policy, and is particularly not limited in the present exemplary embodiment.

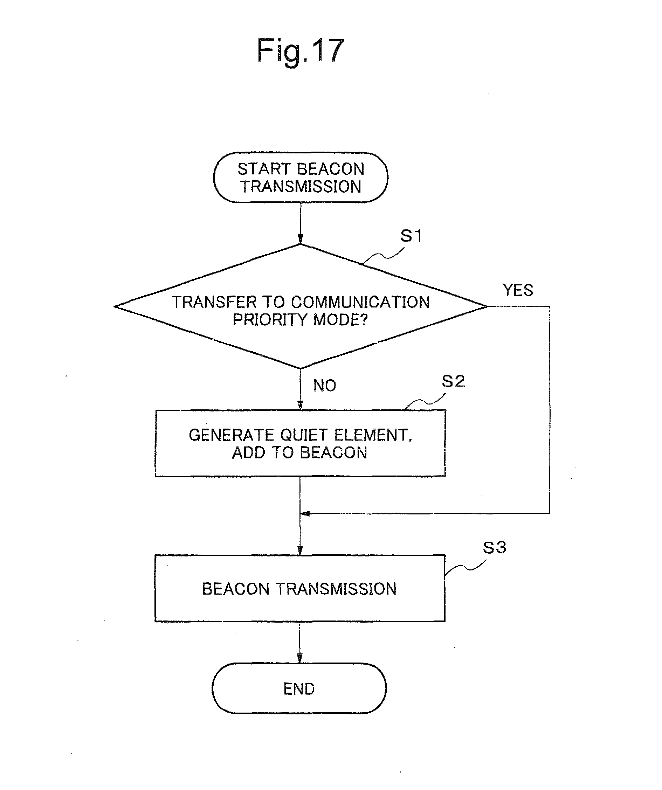

FIG. 17 is a flowchart of a beacon transmission process of the AP 40 performed by using the CPU 34. As described above, if traffic of the AP 40 meets predetermined conditions, the AP 40 transfers into the communication priority mode. The predetermined conditions are a case in which the AP 40 continuously receives a frame from the STAs 51, 52, 53, a case in which the retaining amount of the frames addressed to the STAs 51, 52, 53 received from the LAN/WAN 60 reaches a predetermined amount or more, and the like. When the AP 40 is in the communication priority mode (S1:Yes), a QUIET element is not generated. When the AP 40 is not in the communication priority mode (S1:No), a QUIET element is generated (S2). The generated QUIET element is included in a frame transmitted as a beacon.

The AP 40 transmits a beacon (S3). Therefore, when the AP 40 is in the communication priority mode, a beacon having a QUIET element is transmitted. When the AP 40 is not in the communication priority mode, a beacon without a QUIET element is transmitted.

As described above, the wireless LAN system requests the STA to transfer into the stop transmission state, based on the traffic in the AP. After setting the STA into the stop transmission state, the AP transfers into the Doze state. Accordingly, power saving of the AP is advantageously achieved, while maintaining communication efficiency.

While the present exemplary embodiment operating in the infra-mode is described, it can be applied to a STA transmitting a beacon in the ad hoc mode. That is, in the ad hoc mode, any one of the STAs transmits a beacon, and the other STAs receive the beacon. It is only necessary to transmit a beacon including a QUIET element, like the case of the infra-mode described in the present exemplary embodiment. As a result, since the STA receiving the QUIET element can be set into the stop transmission state, the STA transmitting a beacon can transfer into the Doze state.

Each of the above exemplary embodiments can be combined with the other exemplary embodiment.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2009-251918, filed on November 2, 2009, the disclosure of which is incorporated herein in its entirety by reference.

### REFERENCE SIGNS LIST

10 COMMUNICATION DEVICE
11 TRANSMISSION UNIT
12 RECEPTION UNIT
13 STOP TRANSMISSION REQUEST UNIT
14 STOP RECEPTION UNIT
15 FIRST SIGNAL
1 6 SECOND SIGNAL
17 CPU
18 MEMORY
24 COMMUNICATION DEVICE
21 RECEPTION UNIT
22 TRANSMISSION UNIT
23 STOP TRANSMISSION UNIT
30 WIRELESS LAN MODULE
31 RF UNIT
32 BASEBAND UNIT
33 MAC UNIT
34 CPU
35 MEMORY
36 HOST I/F
37 POWER MANAGEMENT UNIT
40 ACCESS POINT
51 STATION
52 STATION
53 STATION
60 LAN/WAN
61 NETWORK

## Claims

1. A communication device, comprising:
transmission means for transmitting a first signal during a specified time interval to an external communication device provided with a stop transmission function for stopping transmission;
reception means which is provided with a stop reception function for stopping reception, and receives a second signal transmitted by the external communication device;
stop transmission request means which includes, in the first signal, stop transmission request information for requesting the stopping of the transmission of the second signal to the external communication device; and
stop reception means which stops the receive operation of the reception unit after the first signal including the stop transmission request information is transmitted.

2. The communication device of claim 1, wherein the stop transmission request information includes stop transmission time information for specifying a stop transmission time which is a time of stopping the transmission of the external communication device.

3. The communication device of claim 1 or claim 2, wherein the stop transmission request information includes restart transmission time information for specifying a restart transmission time which is a time of restarting the transmission of the external communication device.

4. The communication device of any one of claims 1 to 3, wherein the stop transmission request information includes stop transmission period information for specifying a stop transmission period which is a period of time of the stopping of the transmission by the external communication device.

5. The communication device of any one of claims 1 to 4, wherein the stop transmission request information includes stop transmission frequency information for specifying a stop transmission frequency which is the number of times of repetitions of the stop and the restart of the transmission by the external communication device.

6. The communication device of any one of claims 1 to 5, wherein the stop transmission request information includes stop transmission cycle information for specifying a stop transmission cycle which is a cycle of repetitions of the stop and the restart of the transmission by the external communication device.

7. The communication device of any one of claims 1 to 6, wherein the stop transmission request means includes the stop transmission request information in the first signal based on a state of communication with the external communication device.

8. The communication device of claim 7, wherein the communication state is determined based on a measurement result of an amount of traffic with the external communication device.

9. The communication device of claim 8, wherein the stop transmission request means includes the stop transmission request information in the first signal when the traffic is equal to or less than a specified value.

10. The communication device of claim 8 or claim 9, wherein the stop transmission request means sets information included in the stop transmission request information based on the traffic with the external communication device.

11. The communication device of claim 2, wherein the stop transmission request means sets the stop transmission time information based on the traffic with the external communication device.

12. The communication device of claim 3, wherein the stop transmission request means sets the restart transmission time information based on the traffic with the external communication device.

13. The communication device of claim 4, wherein the stop transmission request means sets the stop transmission period information based on the traffic with the external communication device.

14. The communication device of claim 5, wherein the stop transmission request means sets the stop transmission frequency information based on the traffic with the external communication device.

15. The communication device of claim 6, wherein the stop transmission request means sets the stop transmission cycle information based on the traffic with the external communication device.

16. The communication device of any one of claims 1 to 15, wherein the stop transmission request means includes the stop transmission request information in the first signal based on a condition of a processing load.

17. The communication device of any one of claims 1 to 16, wherein the stop reception means stops a receive operation of the reception means for all or a part of the period from the beginning of the stop of the transmission by the external communication device to the end thereof.

18. The communication device of any one of claims 1 to 4, wherein
communication with the external communication device follows a communication protocol defined by IEEE 802.11 standard,
transmission of the first signal is performed using a beacon defined by the IEEE 802.11 standard, and
the stop transmission request information is transferred using a QUIET element included in the beacon.

19. A communication system, comprising:
second reception means for receiving the first signal transmitted from the communication device of any one of claims 1 to 18;
second transmission means for transmitting the second signal; and
a second communication device including stop transmission means for stopping transmission of the second signal when the first signal includes the stop transmission request information.

20. A communication system, comprising:
a first communication device, comprising
transmission means for transmitting a first signal during a specified time interval;
first reception means which is provided with a stop reception function for stopping reception, and receives a second signal transmitted by an external communication device;
stop transmission request means which includes, in the informing signal, stop transmission request information for requesting stopping of the transmission of the second signal; and
stop reception means which stops the receive operation of the reception means after the informing signal including the stop transmission request information is transmitted; and
a second communication device, comprising:
second reception means for receiving the informing signal;
transmission means for transmitting the second signal; and
stop transmission means for stopping the transmission of the second signal when the informing signal includes the stop transmission request information.

21. A communication control method, comprising:
a step of transmitting a first signal during a specified time interval to an external communication device provided with a stop transmission function for stopping transmission;
a step of being provided with a stop reception function for stopping reception, and receiving a second signal transmitted by the external communication device;
a step of including, in the first signal, stop transmission request information for requesting stopping of the transmission of the second signal to the external communication device; and
a step of stopping a receive operation after the first signal including the stop transmission request information is transmitted;

22. A communication control method program, comprising:
a step of transmitting a first signal during a specified time interval to an external communication device provided with a stop transmission function for stopping transmission;
a step of being provided with a stop reception function for stopping reception, and receiving a second signal transmitted by the external communication device;
a step of including, in the first signal, stop transmission request information for requesting stopping of the transmission of the second signal to the external communication device; and
a step of stopping a receive operation after the first signal including the stop transmission request information is transmitted.

23. A computer-readable storing medium storing the communication device control program of claim 22.
